# EUROPÄISCHE PATENTSCHRIFT

(11) **EP 0 513 511 B1**
(45) Veröffentlichungstag und Bekanntmachung des Hinweises auf die Patenterteilung: **01.07.1998**
(21) Anmeldenummer: 92105635.4
(22) Anmeldetag: 01.04.1992
(51) Int. Cl.: H04L 12/56, H04L 12/26, H04Q 11/04

(54) **Verfahren zum Überprüfen der Zulässigkeit des Einrichtens von virtuellen Verbindungen**
Method for examination of the admissibility of establishment of virtual connections
Procédé pour le contrôle de l'admissibilité d'établissement des connexions virtuelles

(30) Priorität: 09.04.1991 DE 4111477
(43) Veröffentlichungstag der Anmeldung: 19.11.1992
(73) Patentinhaber: SIEMENS AKTIENGESELLSCHAFT, 80333 München (DE)
(72) Erfinder: Wallmeier, Eugen, Dr.rer.nat., W-8000 München 70 (DE)

(56) Entgegenhaltungen:
- EP-A- 0 419 959
- EP-A- 0 473 188
- INTERNATIONAL JOURNAL OF DIGITAL AND ANALOG COMMUNICATIONS SYSTEMS, Band 3, Nr. 1, JUnner-MUrz 1990 E. WALLMEIER "A connection acceptance algorithm for ATM networks based on mean and peak bit rates" Seiten 143-153
- NTZ, EXPERTENWISSEN BER INFORMATIONSTECHNIK UND TELEMATIK, Band 40, Heft 8, August 1987 U. KILLAT "Asynchrone Zeit- vielfachUbermittlung fUr Breitbandnetze" Seiten 572-577

## Beschreibung

Die Erfindung betrifft ein Verfahren zum Überprüfen der Zulässigkeit des Einrichtens von virtuellen Verbindungen auf einer Übertragungsleitung gemäß Oberbegriff des Patentanspruches 1.

Ein derartiges Verfahren ist bereits aus "INTERNATIONAL JOURNAL OF DIGITAL AND ANALOG COMMUNICATION SYSTEMS" Vol. 3, 143 bis 153 (1990) bekannt. Bei diesem bekannten Verfahren ist für sämtliche im Zuge von virtuellen Verbindungen auftretenden Nachrichtenzellenströme ein und dieselbe Zellenverlustwahrscheinlichkeit, d. h. Zellenverlustpriorität, vorausgesetzt.

Es ist nun Aufgabe der vorliegenden Erfindung, einen Weg zu zeigen, wie bei einem Verfahren gemäß Oberbegriff des Patentanspruches 1 auch für den Fall, daß auf einer Übertragungsleitung sowohl Nachrichtenzellenströme mit einer hohen Zellverlustpriorität als auch Nachrichtenzellenströme mit einer niedrigen Zellenverlustpriorität auftreten, sichergestellt ist, daß die Nachrichtenzellenverluste sowohl für Zellen mit einer hohen Priorität als auch für Zellen mit einer niedrigen Priorität innerhalb der jeweils geforderten Zellenverlustwahrscheinlichkeit liegen.

Gelöst wird diese Aufgabe durch die im Patentanspruch 1 angegebenen Verfahrensmerkmale. Die Erfindung bringt dabei den Vorteil mit sich, daß durch die variable Festsetzung des Grenzwertes für die kapazitätsmäßige Auslastung der Übertragungsleitung in Abhängigkeit von dem momentanen Verkehrsaufkommen in relativ einfacher Weise sichergestellt ist, daß durch eine neu eingerichtete virtuelle Verbindung die Zellenverlustwahrscheinlichkeiten für die im Zuge der bis dahin bereits eingerichteten Verbindungen übertragenen Nachrichtenzellen vorgegebene Werte nicht überschreiten.

Vorteilhafte Ausgestaltungen des Verfahrens gemäß der vorliegenden Erfindung ergeben sich aus den Unteransprüchen.

Im folgenden wird nun die vorliegende Erfindung anhand von Zeichnungen beispielsweise näher beschrieben.
FIG 1 zeigt dabei ein Blockschaltbild einer ATM-Vermittlungseinrichtung, bei der die Erfindung angewandt ist, und
FIG 2 zeigt ein Flußdiagramm, auf das im folgenden noch näher eingegangen wird.

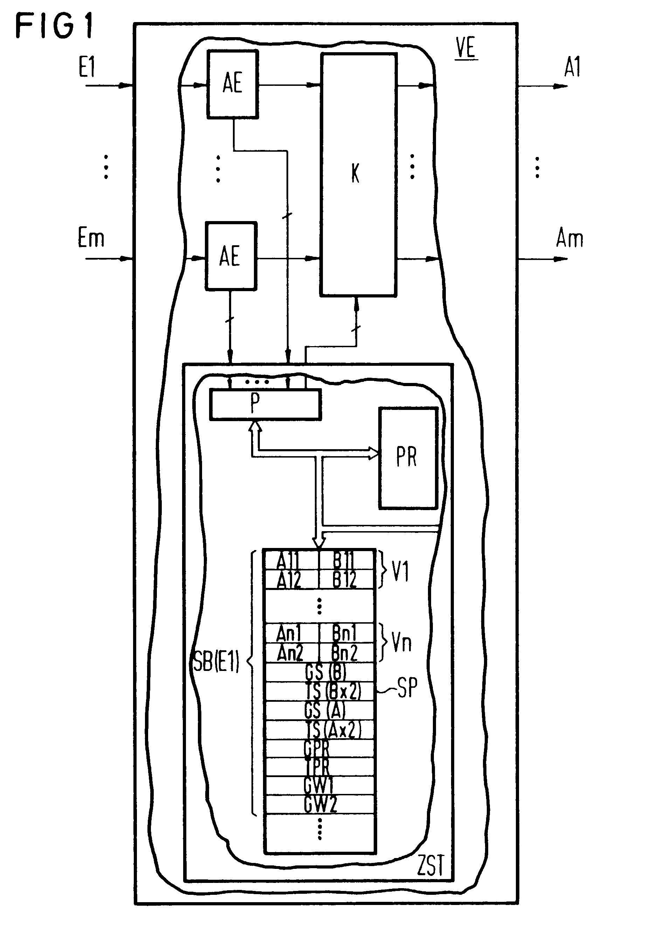

In FIG 1 ist eine ATM-Vermittlungseinrichtung VE schematisch dargesetllt, an welcher eine Mehrzahl von Eingangsleitungen El bis Em sowie eine Mehrzahl von Ausgangsleitungen Al bis Am angeschlossen sind. Von diesen sind in FIG 1 lediglich die Eingangsleitungen El und Em und die Ausgangsleitungen Al und Am angegeben. Auf den Eingangsleitungen und Ausgangsleitungen erfolgt jeweils eine Übertragung von Nachrichtenzellen im Zuge von virtuellen Verbindungen nach einem asynchronen Übertragungsverfahren ("asynchronous transfer mode"). Bei den Nachrichtenzellen möge es sich dabei um Zellen fester Länge handeln, welche jeweils in bekannter Weise über einen Zellenkopf sowie einen Informationsteil verfügen. In dem Informationsteil erfolgt die Übertragung der eigentlichen Nachrichtensignale. Unter Nachrichtensignalen sollen dabei Daten- und Textsignale sowie Sprach- bzw. Bildsignale in digitaler Form verstanden werden. Ein Zellenkopf enthält dagegen u. a. eine sogenannte virtuelle Kanalnummer, durch die die jeweilige virtuelle Verbindung auf der in Frage kommenden Eingangsleitung bzw. Ausgangsleitung bezeichnet ist. In Übertragungspausen werden im übrigen den Nachrichtenzellen entsprechende Leerzellen übertragen.

Von der in FIG 1 dargestellten Vermittlungseinrichtung VE sind lediglich für das Verständnis der vorliegenden Erfindung dienende Einrichtungen dargestellt. Danach ist jeder der Eingangsleitungen El bis Em eine Auswerteeinrichtung AE zugeordnet, wobei die Auswerteeinrichtungen einerseits gemeinsam an eine zentrale Steuereinrichtung ST und andererseits individuell mit einem der Anschlüsse einer Koppelanordnung K in Verbindung stehen, an welche die zuvor erwähnten Ausgangsleitungen Al bis Am angeschlossen sind. Diese Ausgangsleitungen mögen dabei beispielsweise als Verbindungsleitungen zu nachfolgenden Vermittlungseinrichtungen dienen.

Die Auswerteeinrichtungen AE dienen jeweils für das Überwachen des auf der jeweiligen Eingangsleitung auftretenden Zellenstromes hinsichtlich des Auftretens von Zellen, mit denen der Aufbau virtueller Verbindungen angefordert wird, und für das Weiterleiten derartiger Zellen an die zentrale Steuereinrichtung ZST. Diese zentrale Steuereinrichtung überprüft dabei bei Auftreten einer derartigen Zelle, wie im folgenden noch näher erläutert werden wird, ob auf der jeweiligen Eingangsleitung für eine weitere Verbindung eine ausreichende Übertragungskapazität vorhanden ist. Lediglich bei einer ausreichenden Übertragungskapazität wird eine gerade gewünschte virtuelle Verbindung eingerichtet und von der zentralen Steuereinrichtung her die Koppelanordnung K entsprechend gesteuert. Da die Arbeitsweise und die Steuerung einer derartigen Koppelanordnung bereits hinlänglich bekannt sind, wird im folgenden darauf nicht näher eingegangen. Liegt dagegen keine ausreichende Übertragungskapazität auf der erwähnten Eingangsleitung vor, so wird die gerade gewünschte virtuelle Verbindung abgewiesen. Hierzu wird beispielsweise unter der Steuerung der zentralen Steuereinrichtung ST eine Zelle mit einer entsprechenden Signalisierungsinformation zu derjenigen Teilnehmereinrichtung hin übertragen, von der die gerade abgewiesene virtuelle Verbindung angefordert worden ist. Auch derartige Steuerungsvorgänge im Zuge eines Verbindungsaufbaues sind bereits bekannt, so daß hier darauf nicht näher eingegangen zu werden braucht.

Auch bezüglich der zentralen Steuereinrichtung ZST sind in FIG 1 lediglich für das Verständnis der vorliegenden Erfindung dienende Einrichtungen dargestellt. So weist diese einen Prozessor PR auf, welcher über ein Bussystem einerseits mit einer Schnittstelleneinrichtung P und andererseits mit einer Speicheranordnung SP verbunden ist. Die Schnittstelleneinrichtung P, die an Ausgänge der Auswerteeinrichtungen AE sowie Steuereingänge der Koppelanordnung K angeschlossen ist, dient dabei einerseits für die Übernahme der von den einzelnen Auswerteeinrichtungen gelieferten Informationen und andererseits für die Abgabe von Steuerinformationen an die Koppelanordnung K.

Die Speicheranordnung SP weist eine der Anzahl der Eingangsleitungen El bis Em entsprechende Anzahl von gleich organisierten Speicherbereichen SB(El), ..., SB(Em) auf, von denen lediglich der der Eingangsleitung El zugeordnete Speicherbereich SB(El) stellvertretend für die übrigen Speicherbereiche detaillierter dargestellt ist. Diesem Speicherbereich SB(E1) ist eine der Anzahl der über die zugeordnete Eingangsleitung El maximal einrichtbaren virtuellen Verbindungen entsprechende Anzahl von Speicherzellen zugehörig. Bei maximal n möglichen virtuellen Verbindungen sind also, wie in FIG 1 dargestellt, n mit Vl bis Vn bezeichnete Speicherzellen für die Speicherung noch später zu erläuternder verbindungsindividueller Parameter vorgesehen. Diese sind für die Speicherzelle Vl mit A11, A12, B11 und B12, für die Speicherzelle Vn dagegen mit An1, An2, Bn1 und Bn2 bezeichnet. Neben diesen verbindungsindividuellen Speicherzellen sind leitungsbezogene Speicherzellen vorgesehen,die in FIG 1 die Bezeichnung GS(B), TS(Bx2), GS(A), TS(Ax2), GPR, TPR, GW1 und GW2 tragen. Wie im folgenden noch dargelegt werden wird, dienen diese Speicherzellen für die Zwischenspeicherung von leitungsbezogenen, verkehrsabhängigen Variablen, nach deren Maßgabe die Zulässigkeit des Einrichtens einer neuen virtuellen Verbindung auf der hier als Beispiel angegebenen Eingangsleitung El überprüft wird.

Nachdem zuvor der Aufbau der in FIG 1 dargestellten Vermittlungseinrichtung erläutert worden ist, wird nunmehr auf deren Wirkungsweise näher eingegangen.

Für die Einleitung des Aufbaus einer virtuellen Verbindung über eine der Eingangsleitungen El bis Em, die beispielsweise die Eingangsleitung El sein möge, werden von einer mit der Eingangsleitung El verbundenen rufenden Teilnehmereinrichtung her in einer Signalisierungsphase Signalisierungszelle zu der Vermittlungseinrichtung VE hin übertragen, durch welche einerseits der Aufbau einer virtuellen Verbindung angefordert und andererseits die gewünschte virtuelle Verbindung spezifiziert wird. In diesen Zellen sind u. a. neben Zielangaben (gewünschte gerufene Teilnehmereinrichtung) Bitratenangaben enthalten, aus welchen hervorgeht, in welcher Weise beabsichtigt ist, nach einem erfolgreichen Verbindungsaufbau Nachrichtenzellen zu übertragen. Bei diesen Bitratenangaben handelt es sich für den Fall, daß für die gewünschte virtuelle Verbindung eine einheitliche Zellenverlustwahrscheinlichkeit gefordert ist, um einen Spitzenbitratenwert, einen mittleren Bitratenwert und um eine Angabe der geforderten Zellenverlustwahrscheinlichkeit. Durch die rufende Teilnehmereinrichtung kann dabei beispielsweise zwischen zwei unterschiedlichen Wahrscheinlichkeitswerten gewählt werden. Dem niedrigeren der beiden Wahrscheinlichkeitswerte entspricht dabei eine hohe Zellenverlustpriorität, dem höheren Wahrscheinlichkeitswert dagegen eine niedrige Zellenverlustpriorität.

Es ist jedoch auch möglich, innerhalb einer virtuellen Verbindung einen Teil der Nachrichtenzellen mit hoher Zellenverlustpriorität, den verbleibenden Teil dagegen mit niedriger Zellenverlustpriorität zu übertragen, d. h. innerhalb einer solchen virtuellen Verbindung treten Nachrichtenzellenströme mit unterschiedlicher Zellenverlustpriorität auf. In diesem Falle sind in den obengenannten Signalisierungszellen von der rufenden Teilnehmereinrichtung her als Bitratenangaben die Spitzenbitratenwerte und mittleren Bitratenwerte beiden Zellenverlustprioritäten gesondert anzugeben.

Erhält die zentrale Steuereinrichtung ZST nun z. B. von der der Eingangsleitung El zugeordneten Auswerteeinrichtung AE Signalisierungszellen zugeführt, so prüft der Prozessor PR, wie im folgenden noch detaillierter erläutert wird, anhand der in diesen enthaltenen Bitratenangaben, ob die gewünschte Verbindung aufgrund der momentanen Verkehrsbelastung durch bereits eingerichtete virtuelle Verbindungen zusätzlich eingerichtet werden kann oder nicht. Ist eine solche Einrichtung möglich, so werden die mit den betreffenden Signalisierungszellen übertragenen Bitratenangaben in den der Eingangsleitung El zugeordneten Speicherbereich SB(El) der in FIG 1 dargestellten Speicheranordnung SP übernommen und dort in der der gerade einzurichtenden virtuellen Verbindung zugeordneten Speicherzelle für die gesamte Verbindungsdauer gespeichert. Ist dieser Verbindung beispielsweise die Speicherzelle Vl zugeordnet, so werden für den Fall, daß innerhalb der betreffenden virtuellen Verbindung Nachrichtenzellen lediglich mit einer der zuvor genannten Zellenverlustprioritäten übertragen werden sollen, der angemeldete mittlere Bitratenwert und Spitzenbitratenwert bei einer gewünschten niedrigen Zellenverlustpriorität als Parameter A11 bzw. B11, bei einer gewünschten hohen Zellenverlustpriorität dagegen als Parameter A12 bzw. B12 gespeichert. Sind dagegen bei der betrachteten virtuellen Verbindung beide Zellenverlustprioritäten vorgesehen, so werden der mittlere Bitratenwert und der Spitzenbitratenwert für die niedrige Zellenverlustpriorität als Parameter A11 bzw. B11 und der mittlere Bitratenwert und Spitzenbitratenwert für die hohe Zellenverlustpriorität als Parameter A12 bzw. B12 gespeichert. Ein solches Speichern von Parametern erfolgt in entsprechender Weise auch für alle übrigen, auf den Eingangsleitungen El bis Em eingerichteten virtuellen Verbindungen.

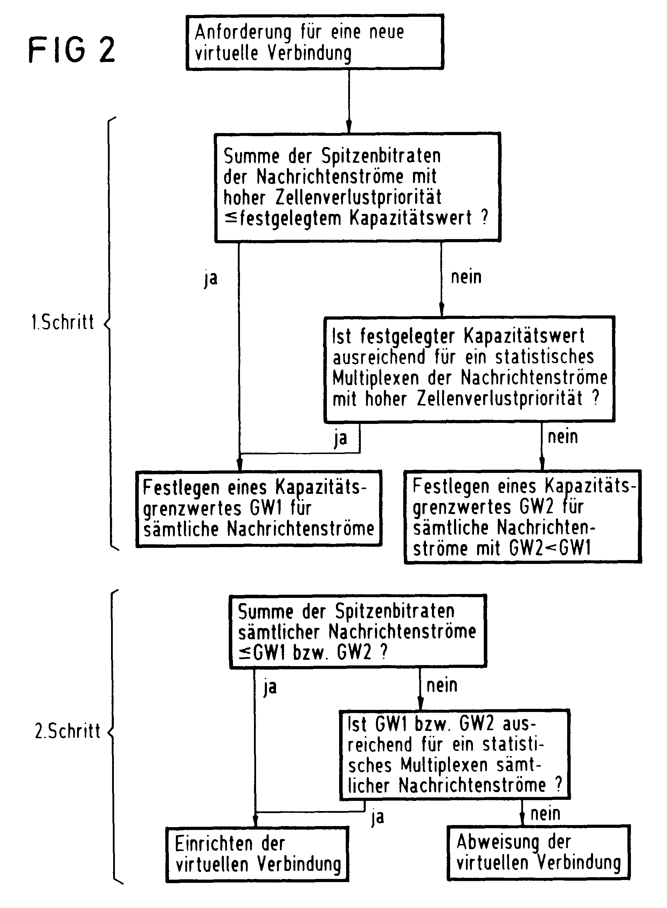

Im folgenden wird nun auf die Überprüfung der Zulässigkeit des Einrichtens einer virtuellen Verbindung durch die zentrale Steuereinrichtung ZST anhand des in FIG 2 dargestellten Flußdiagramms eingegangen. Als Beispiel wird davon ausgegangen, daß von der der Eingangsleitung El zugeordneten Auswerteeinrichtung AE oben erwähnte Signalisierungszellen erkannt und der zentralen Steuereinrichtung ZST zugeführt werden. Wie in FIG 2 angegeben, wird dabei in einem ersten Schritt zunächst ein Summenwert aus sämtlichen in dem Speicherbereich SB(El) der Speicheranordnung SP für die hohe Zellenverlustpriorität bereits gespeicherten Spitzenbitratenwerten und eines für diese Zellenverlustpriorität ggf. bei der gerade einzurichtenden virtuellen Verbindung zu berücksichtigenden Spitzenbitratenwertes ermittelt. D. h. die für die eingerichteten Verbindungen in dem Speicherbereich SB(El) als Parameter B12, B22, ..., Bn2 gespeicherten Spitzenbitratenwerte werden addiert und dem daraus resultierenden Teilsummenwert wird ggf. noch ein bei der neu einzurichtenden virtuellen Verbindung zu berücksichtigender Spitzenbitratenwert zugefügt. Der so ermittelte Summenwert wird anschließend mit einem für den Nachrichtenverkehr mit hoher Zellenverlustpriorität festgesetzten, unterhalb eines die ausnutzbare Übertragungskapazität auf der Eingangsleitung El angebenden Grenzwertes liegenden Kapazitätswert verglichen. Ist dabei der Summenwert kleiner oder gleich dem festgelegten Kapazitätswert, so wird als ausnutzbare Übertragungskapazität ein erster Übertragungskapazitätswert den weiteren Prüfvorgängen zugrunde gelegt. Dieser erste Übertragungskapazitätswert ist in der Speicheranordnung SP unter der mit GW1 bezeichneten Speicherzelle gespeichert. Bei einem den festgelegten Kapazitätswert überschreitenden Summenwert wird dagegen überprüft, ob unter Berücksichtigung sämtlicher Nachrichtenströme mit hoher Zellenverlustpriorität einschließlich des ggf. für die einzurichtende virtuelle Verbindung zu berücksichtigenden Nachrichtenstromes der festgelegte Kapazitätswert für ein statistisches Multiplexen dieser Nachrichtenströme ausreichend ist. Bei einem für ein solches statistisches Multiplexen ausreichenden Kapazitätswert wird als Grenzwert der bereits erwähnte erste Übertragungskapazitätswert, anderenfalls dagegen ein gegenüber diesem geringerer zweiter Übertragungskapazitätswert festgelegt. Dieser zweite Übertragungskapazitätswert ist in der mit GW2 bezeichneten Speicherzelle der Speicheranordnung SP gespeichert.

Bezüglich der Bildung des zuvor erwähnten Summenwertes wird bei dem vorliegenden Ausführungsbeispiel im übrigen so vorgegangen, daß der aktuelle Teilsummenwert der in den Speicherzellen des Speicherbereiches SB(El) gespeicherten Spitzenbitratenwerte für Nachrichtenzellenströme hoher Zellenverlustpriorität in einer gesonderten, mit TS(Bx2) bezeichneten Speicherzelle der Speicheranordnung SP zwischengespeichert ist. Dieser zwischengespeicherte Teilsummenwert wird mit jedem Aufbau bzw. Auslösen einer virtuellen Verbindung durch Addieren bzw. Subtrahieren eines für die aufgebaute bzw. ausgelöste Verbindung zu berücksichtigenden Spitzenbitratenwertes aktualisiert. Auf diese Weise werden bei Vorliegen eines Verbindungswunsches die für die Bildung des zuvor erwähnten Summenwertes erforderlichen Steuerungs vorgänge in dem Prozessor PR minimiert.

In einem in FIG 2 angegebenen zweiten Schritt wird ein Gesamtsummmenwert aus sämtlichen in dem Speicherbereich SB(El) der Speicheranordnung SP gespeicherten Spitzenbitratenwerten und den für die gerade einzurichtende virtuelle Verbindung zu berücksichtigenden Spitzenbitratenwerten ermittelt. D. h. die für die bereits eingerichteten Verbindungen in dem Speicherbereich SB(El) ggf. als Parameter B11, B12, ..., Bn1, Bn2 gespeicherten Spitzenbitratenwerte werden addiert und dem daraus resultierenden Teilsummenwert wird bzw. werden der bei der neu einzurichtenden virtuellen Verbindung zu berücksichtigende Spitzenbitratenwert bzw. die zu berücksichtigenden Spitzenbitratenwerte zugefügt. Auch für die Bildung dieses Gesamtsummenwertes wird der aus den Spitzenbitratenwerten sämtlicher bereits eingerichteter Verbindungen resultierende aktuelle Teilsummenwert in einer gesonderten, mit GS(B) bezeichneten Speicherzelle der Speicheranordnung SP zwischengespeichert und mit jedem Aufbau bzw. Auslösen einer virtuellen Verbindung aktualisiert. Damit ist auch für die Bildung des betreffenden Gesamtsummenwertes der Steuerungsaufwand in dem Prozessor PR minimiert.

Der gerade erwähnte Gesamtsummenwert wird anschließend mit dem im Zuge des in FIG 2 angegebenen, zuvor erläuterten ersten Schrittes ermittelten Übertragungskapazitätswert (erster bzw. zweiter Übertragungskapazitätswert) verglichen. Ist dabei der Gesamtsummenwert kleiner oder gleich dem festgelegten Übertragungskapazitätswert, so wird die gerade gewünschte virtuelle Verbindung eingerichtet.

Bei einem dem festgelegten Übertragungskapazitätswert überschreitenden Gesamtsummenwert wird dagegen überprüft, ob unter Berücksichtigung sämtlicher auf der Eingangsleitung El auftretenden Nachrichtenströme einschließlich des für die einzurichtende virtuelle Verbindung zu berücksichtigenden Nachrichtenstromes der festgelegte Übertragungskapazitätswert für ein statistisches Multiplexen dieser Nachrichtenströme ausreichend ist. Bei einem für ein solches statistisches Multiplexen ausreichenden Übertragungskapazitätswert wird die gerade gewünschte virtuelle Verbindung eingerichtet, anderenfalls dagegen zurückgewiesen. Damit ist die Überprüfung der Zulässigkeit des Einrichtens der betreffenden virtuellen Verbindung abgeschlossen. Entsprechende Überprüfungsvorgänge werden von dem Prozessor PR der zentralen Steuereinrichtung ZST auch für alle übrigen, über die Eingangsleitungen El bis Em einzurichtenden virtuellen Verbindungen abgewickelt.

Für das im ersten Schritt gemäß FIG 2 vorgesehene Überprüfen, ob bei einem festgelegten Kapazitätswert einer Eingangsleitung ein stastisches Multiplexen für Nachrichtenströme mit einer hohen Zellenverlustpriorität möglich ist, kann beispielsweise ein nachfolgend beschriebenes Verfahren angewandt sein. Als Beispiel wird dabei wieder von der Eingangsleitung El ausgegangen.

Der Prozessor PR der zentralen Steuereinrichtung ZST bildet einerseits einen Teilsummenwert TS(Ax2) aus dem in den Speicherbereich SB(El) für bereits bestehende virtuelle Verbindungen gespeicherten mittleren Bitratenwerten, die für Nachrichtenströme mit hoher Zellenverlustpriorität zu berücksichtigen sind, d. h. der Prozessor PR summiert die als Parameter A12, A22, ..., An2 gespeicherten mittleren Bitratenwerte auf.

Dieser Teilsummenwert wird in der mit TS(Ax2) bezeichneten Speicherzelle des Speicherbereiches SB(El) gespeichert und mit jedem Aufbau bzw. Auslösen einer virtuellen Verbindung durch Addieren bzw. Subtrahieren des in Frage kommenden Parameters aktualisiert.

Andererseits bildet der Prozessor PR für jede bestehende virtuelle Verbindung mit einem Nachrichtenstrom hoher Zellenverlustpriorität ein Produktwert aus dem mittleren Bitratenwert und der Differenz zwischen dem Spitzenbitratenwert und mittleren Bitratenwert für die hohe Zellenverlustpriorität, d. h. daß beispielsweise für die virtuelle Verbindung, der die Speicherzelle Vl zugeordnet ist, bei Vorliegen eines Nachrichtenstromes mit hoher Zellenverlustpriorität ein Produkt aus dem Parameter A12 und der Differenz der Parameter B12 und A12 gebildet wird. Die einzelnen, für Nachrichtenströme hoher Zellenverlustpriorität in Frage kommenden Produktwert werden zu einem Teilproduktsummenwert TPR aufsummiert und in der mit TPR bezeichneten Speicherzelle des Speicherbereiches SB(El) gespeichert. Dieser Teilproduktsummenwert wird mit jedem Aufbau bzw. Auslösen einer virtuellen Verbindung durch Addieren bzw. Subtrahieren des in Frage kommenden Produktwertes aktualisiert.

Bei Vorliegen eines Verbindungswunsches für die Eingangsleitung El entnimmt der Prozessor PR dem Speicherbereich SB(El) den Teilsummenwert TS(Ax2) und den Teilproduktsummenwert TPR und fügt diesen einen mittleren Bitratenwert bzw. den zuvor erwähnten Produktwert zu, falls die betreffende virtuelle Verbindung einen Nachrichtenstrom mit hoher Zellerverlustpriorität liefern würde. Der Prozessor bildet dann aus dem ggf. erweiterten Teilproduktsummenwert einen Quadratwurzelwert und multipliziert diesen mit einem Vergößerungsfaktor. Zu dem durch diesen Vergrößerungsfaktor erhöhten Quadratwurzelwert wird anschließend noch der ggf. erweiterte Teilsummenwert für die Gewinnung eines Vergleichswertes addiert. Ist dieser Vergleichswert nun kleiner oder gleich dem für den Nachrichtenverkehr mit hoher Zellenverlustprioriät festgesetzten, oben erwähnten Kapazitätswert, so ist ein statistisches Multiplexen der betreffenden Nachrichtenströme möglich.

Für das im zweiten Schritt gemäß FIG 2 vorgesehene Überprüfen, ob bei einem im ersten Schritt festgelegten Übertragungskapazitätswert (GW1 bzw. GW2) für sämtliche auf einer Eingangsleitung auftretenden Nachrichtenströme ein statistisches Multiplexen möglich ist, kann ein dem gerade erläuterten Verfahren entsprechendes Verfahren angewandt werden. Ein Unterschied besteht lediglich darin, daß der Prozessor PR in dem zweiten Schritt beispielsweise für die Eingangsleitung El einerseits anstelle eines Teilsummenwertes TS (Ax2) einen Gesamtsummenwert GS(A) aus sämtlichen in dem Speicherbereich SB(El) für bestehende virtuelle Verbindungen gespeicherten mittleren Bitratenwerten (A11, A12, ..., An2) und andererseits anstelle eines Teilproduktsummenwertes TPR einen Gesamtproduktsummenwert GPR bildet, in welchem für jede bestehende virtuelle Verbindung eine der Anzahl der zu berücksichtigenden unterschiedlichen Nachrichtenströme entsprechende Anzahl von in oben angegebener Weise gebildeten Produktwerten enthalten ist. D. h. für eine virtuelle Verbindung mit lediglich einem einheitlichen Nachrichtenstrom (hoher oder niedriger Zellenverlustpriorität) wird ein einziger Produktwert, bei einer virtuellen Verbindung mit sowohl einem Nachrichtenstrom hoher Zellenverlustpriorität als auch einem Nachrichtenstrom niedriger Zellenverlustpriorität wird dagegen für jeden dieser ein gesonderter Produktwert gebildet. Der Gesamtsummenwert GS(A) und der Gesamtproduktsummenwert GPR werden dabei in einer mit GS(A) bzw. GPR bezeichneten Speicherzelle des Speicherbereiches SB(El) gespeichert und mit jedem Aufbau bzw.Auslösen einer virtuellen Verbindung in der oben angegeben Weise aktualisiert.

Bei Vorliegen eines Verbindungswunsches wird dann nach einer Erweiterung des Gesamtsummenwertes GS(A) und des Gesamtproduktsummenwertes GPR um die für die gewünschte virtuelle Verbindung zu berücksichtigenden Anteile in der oben angegebenen Weise ein Vergleichswert gebildet, welcher bei einem Überschreiten des im ersten Schritt gemäß FIG 2 festgelegten Übertragungskapazitätswertes zu einer Ablehnung der gerade gewünschten vituellen Verbindung führt.

Bei dem vorstehend beschriebenen Ausführungsbeispiel wurde die Überprüfung der Zulässigkeit des Einrichtens einer virtuellen Verbindung auf externen Eingangsleitungen einer ATM-Vermittlungseinrichtung mit Hilfe eines dieser zugehörigen zentralen Prozessors PR beschrieben. Eine solche Überprüfung kann jedoch auch durch den Eingangsleitungen individuell bzw. durch eine Gruppe von Eingangsleitungen zugeordnete Prozessoren durchgeführt werden.

Außerdem ist das beschriebene Verfahren auch innerhalb einer mehrstufigen ATM-Vermittlungseinrichtung für die den einzelnen Stufen jeweils zugeführten internen Eingangsleitungen anwendbar, wobei zweckmäßigerweise eine virtuelle Verbindung erst dann zugelassen bzw. abgewiesen wird, nachdem für sämtliche in die betreffende virtuelle Verbindung einbezogenen externen und internen Eingangsleitungen eine zuvor beschriebene Überprüfung durchgeführt worden ist. Dabei kann eine solche Überprüfung in einer mehrstufigen ATM-Vermittlungseinrichtung entweder durch einen sämtlichen Stufen gemeinsam zugeordneten Prozessor oder durch den Stufen individuell zugeordnete Prozessoren durchgeführt werden.

Darüber hinaus ist die zuvor beschriebene Überprüfung der Zulässigkeit des Einrichtens von virtuellen Verbindungen in einer ein- oder mehrstufigen ATM-Vermittlungseirnichtung auch für externe bzw. interne Ausgangsleitungen anwendbar. Dabei kann dies alternativ oder zusätzlich zur Überprüfung von externen bzw. internen Eingangsleitungen vorgesehen sein. Letzteres ist zweckmäßig für eine sowohl als Ursprungs- als auch Zielvermittlungseinrichtung dienende ATM-Vermittlungseinrichtung bzw. für eine Zielvermittlungseinrichtung in einem eine Mehrzahl von Vermittlungseinrichtungen umfassenden ATM-Vermittlungsnetz.

Schließlich sei noch darauf hingewiesen, daß das vorstehend beschriebene Verfahren gemäß der vorliegenden Erfindung nicht nur in ATM-Vermittlungseinrichtungen, sondern auch allgemein in Kommunikationseinrichtungen anwendbar ist, in welchen die Zulässigkeit des Einrichtens von virtuellen Verbindungen auf mit diesen verbundenen Übertragungsleitungen zu überprüfen ist.

## Patentansprüche

1. Verfahren zum Überprüfen der Zulässigkeit des Einrichtens von virtuellen Verbindungen, die über eine für einen asynchronen Transfermodus ausgelegte Übertragungsleitung verlaufen, in einer mit der Übertragungsleitung verbundenen Kommunikationseinrichtung, in welcher für jede der über die Übertragungsleitung verlaufenden virtuellen Verbindungen im Zuge des jeweiligen Verbindungsaufbaus wenigstens ein Spitzenbitratenwert sowie ein mittlerer Bitratenwert festgehalten werden und eine virtuelle Verbindung lediglich dann neu eingerichtet wird, wenn entweder ein aus den Spitzenbitratenwerten der bereits eingerichteten virtuellen Verbindungen und dem Spitzenbitratenwert der gerade einzurichtenden virtuellen Verbindung ermittelter Summenwert kleiner bzw. gleich einem für die Übertragungsleitung festgelegten unterhalb einer maximalen Übertragungskapazität liegenden Grenzwert ist oder bei einem den Grenzwert überschreitenden Summenwert der Grenzwert unter Berücksichtigung der Spitzenbitratenwerte und mittleren Bitratenwerte der bereits eingerichteten virtuellen Verbindungen sowie der gerade einzurichtenden virtuellen Verbindung für ein statistisches Multiplexen der betreffenden virtuellen Verbindungen ausreichend ist,
**dadurch gekennzeichnet,**
daß für im Zuge der virtuellen Verbindungen mit einer hohen Zellenverlustpriorität zu übertragende Nachrichtenströme jeweils sowohl die Spitzenbitratenwerte als auch die mittleren Bitratenwerte gesondert festgehalten und für die betreffenden Nachrichtenströme ein unterhalb des Grenzwertes liegender Kapazitätswert festgelegt wird,
daß ein Teilsummenwert aus den für Nachrichtenströme mit einer hohen Zellverlustpriorität festgehaltenen Spitzenbitratenwerten und einem ggf. für eine gerade neu einzurichtende Verbindung zu berücksichtigenden Spitzenbitratenwert ermittelt wird,
daß bei einem Teilsummenwert, der kleiner oder gleich dem festgelegten Kapazitätswert ist, als Grenzwert ein erster Übertragungskapazitätswert festgelegt wird,
daß bei einem dem festgelegten Kapazitätswert überschreitenden Teilsummenwert unter Berücksichtigung der Spitzenbitratenwerte und mittleren Bitratenwerte sämtlicher Nachrichtenströme mit hoher Zellenverlustpriorität einschließlich des gegebenenfalls für die einzurichtende virtuelle Verbindung zu berücksichtigenden Nachrichtenstromes überprüft wird, ob der festgelegte Kapazitätswert für ein statistisches Multiplexen dieser Nachrichtenströme ausreichend ist,
und daß bei einem für ein solches statistisches Multiplexen ausreichenden Kapazitätswert als Grenzwert der bereits erwähnte erste Übertragungskapazitätswert, anderenfalls dagegen ein gegenüber diesem geringerer zweiter Übertragungskapazitätswert festgelegt wird.

2. Verfahren nach Anspruch 1,
**dadurch gekennzeichnet,**
daß mit jedem Einrichten bzw. Auslösen einer virtuellen Verbindung für die Nachrichtenströme mit hoher Zellenverlustpriorität einerseits ein aus den mittleren Bitratenwerten gebildeter Teilsummenwert und andererseits ein Produktsummenwert aktualisiert wird, in welchem für jede der bestehenden virtuellen Verbindungen ein Produktwert aus dem mittleren Bitratenwert und der Differenz zwischen dem Spitzenbitratenwert und dem mittleren Bitratenwert enthalten ist,
daß der betreffende Teilsummenwert bzw. Produktsummenwert um einen für die einzurichtende virtuelle Verbindung zu berücksichtigenden mittleren Bitratenwert bzw. Produktsummenwert erweitert wird, falls bei der betreffenden virtuellen Verbindung ein Nachrichtenstrom mit hoher Zellenverlustpriorität vorgesehen ist,
daß ein mit einem Vergrößerungsfaktor multiplizierter Quadratwurzelwert des ggf. erweiterten Produktsummenwertes zu dem ggf. erweiterten Teilsummenwert addiert wird
und daß durch einen daraus resultierenden Vergleichwert, der kleiner oder gleich dem festgelegten Kapazitätswert ist, die Möglichkeit für ein statistisches Multiplexen von Nachrichtenströmen mit hoher Zellenverlustpriorität angezeigt wird.

3. Verfahren nach Anspruch 1 oder 2,
**dadurch gekennzeichnet,**
daß mit jedem Einrichten bzw. Auslösen einer virtuellen Verbindung für sämtliche Nachrichtenströme einerseits ein aus den mittleren Bitratenwerten gebildeter Teilsummenwert und andererseits ein Produktsummenwert aktualisiert wird, in welchem für jede der bestehenden virtuellen Verbindungen eine der Anzahl der bei der jeweiligen virtuellen Verbindung auftretenden unterschiedlichen Nachrichtenströme entsprechende Anzahl von Produktwerten, jeweils gebildet aus dem mittleren Bitratenwert und der Differenz zwischen dem Spitzenbitratenwert und dem mittleren Bitratenwert des jeweiligen Nachrichtenstromes, enthalten ist,
daß der betreffende Teilsummenwert bzw. Pruduktsummenwert um eine der Anzahl der bei der einzurichtenden virtuellen Verbindung zu berücksichtigenden unterschiedlichen Nachrichtenströme entsprechende Anzahl von mittleren Bitratenwerten bzw. Produktsummenwerten erweitert wird, daß ein mit einem Vergrößerungsfaktor multiplizierter Quadratwurzelwert des erweiterten Produktsummenwertes zu dem erweiterten Teilsummenwert addiert wird
und daß durch einen daraus resultiertenden Vergleichswert, der kleiner oder gleich dem festgelegten Grenzwert ist, die Möglichkeit für ein statistisches Multiplexen sämtlicher zu berücksichtigender Nachrichtenströme angezeigt wird.

## Claims

1. Method for checking the admissibility of establishing virtual links which run via a transmission line which is configured for asynchronous transfer mode, in a communications device which is connected to the transmission line and in which at least one peak bit rate value and an average bit rate value are stored, in the course of the respective link setup, for each of the virtual links running via the transmission line, and a virtual link is newly established only if either a sum value which is determined from the peak bit rate values of the virtual links which have already been established and from the peak bit rate value of the virtual link which is just to be established is smaller than or equal to a limit value which is defined for the transmission line and lies below a maximum transmission capacity, or, in the case of a sum value exceeding the limit value, the limit value, taking into account the peak bit rate values and average bit rate values of the virtual links which have already been established and the virtual link which is just to be established is sufficient for statistical multiplexing of the respective virtual links, characterized in that, for message streams which are to be transmitted with a high cell loss priority in the course of the virtual links, in each case both the peak bit rate values and the average bit rate values are stored separately and a capacity value which lies below the limit value is defined for the respective message streams, in that a partial sum value is determined from the peak bit rate values which are stored for message streams with a high cell loss priority and from a peak bit rate value which is to be taken into account, if appropriate, for a link which is just to be newly set up, in that, in the case of a partial sum value which is smaller than or equal to the defined capacity value, a first transmission capacity value is defined as limit value, in that, in the case of a partial sum value which exceeds the defined capacity value, it is checked, taking into account the peak bit rate values and average bit rate values of all the message streams with high cell loss priority including the message stream to be taken into account, if appropriate, for the virtual link to be set up, whether the defined capacity value is sufficient for a statistical multiplexing of these message streams, and in that, in the case of a capacity value which is sufficient for such statistical multiplexing, the first transmission capacity value already mentioned is defined as limit value, and on the other hand, otherwise, a second transmission capacity value which is less than the latter is defined.

2. Method according to Claim 1, characterized in that, every time a virtual link for the message streams with high cell loss priority is established and/or released, on the one hand, a partial sum value which is formed from the average bit rate values is updated and, on the other hand, a product sum value is updated, which product sum value includes, for each of the existing virtual links, a product value formed from the average bit rate value and from the difference between the peak bit rate value and the average bit rate value, in that the respective partial sum value and/or product sum value is expanded by an average bit rate value and/or product sum value which is to be taken into account for the virtual link to be established, if a message stream with high cell loss priority is provided for the respective virtual link, in that a square root value, multiplied by an enlargement factor, of the, if appropriate, expanded product sum value is added to the, if appropriate, expanded partial sum value, and in that the possibility of a statistical multiplexing of message streams with high cell loss priority is indicated by means of a comparison value which results therefrom and which is smaller than or equal to the defined capacity value.

3. Method according to Claim 1 or 2, characterized in that, every time a virtual link for all the message streams is established and/or released, on the one hand, a partial sum value which is formed from the average bit rate values is updated and, on the other hand, a product sum value is updated, which product sum value includes, for each of the existing virtual links, a number of product values which corresponds to the number of different message streams occurring on the respective virtual link, said product values being formed in each case from the average bit rate value and the difference between the peak bit rate value and the average bit rate value of the respective message stream, in that the respective partial sum value and/or product sum value is expanded by the number of average bit rate values and/or product sum values corresponding to the number of different message streams to be taken into account for the virtual link to be established, in that a square root value, multiplied by an enlargement factor, of the expanded product sum value is added to the expanded partial sum value, and in that the possibility of a statistical multiplexing of all the message streams to be taken into account is indicated by means of a comparison value which results therefrom and which is smaller than or equal to the defined limit value.

## Revendications

1. Procédé pour vérifier l'admissibilité de l'établissement de liaisons virtuelles, qui s'étendent sur une ligne de transmission conçue pour un mode de transfert asynchrone, dans un dispositif de communication qui est relié à la ligne de transmission et dans lequel, pour chacune des liaisons virtuelles s'étendant par l'intermédiaire de la ligne de transmission, on fixe, à la suite de l'établissement de liaison associé, au moins une valeur de débit binaire de pointe ainsi qu'une valeur de débit binaire moyenne et on établit ensuite nouvellement une liaison virtuelle que si une valeur somme obtenue à partir des valeurs de débit binaire de pointe des liaisons virtuelles déjà établies et à partir de la valeur de débit binaire de pointe de la liaison virtuelle justement à établir est inférieure ou égale à une valeur limite fixée pour la ligne de transmission, inférieure à une capacité de transmission maximum, ou si, pour une valeur de somme supérieure à la valeur limite, la valeur limite est suffisante, en tenant compte des valeurs de débit binaire de pointe et des valeurs de débit binaire moyennes des liaisons virtuelles déjà établies ainsi que de la liaison virtuelle justement à établir, pour un multiplexage statistique des liaisons virtuelles concernées, caractérisé en ce que, pour des flux d'informations à transmettre à la suite de liaisons virtuelles en ayant une haute priorité de perte de cellules, on retient aussi bien les valeurs de débit binaire de pointe que les valeurs de débit binaire moyennes et on fixe, pour les flux d'informations concernés, une valeur de capacité inférieure à la valeur limite, en ce que l'on détermine une valeur de somme partielle à partir des valeurs de débit binaire de pointe retenues pour des flux d'informations ayant une haute priorité de perte de cellules et à partir éventuellement d'une valeur de débit binaire de pointe à prendre en compte pour une liaison justement nouvellement à établir, en ce que, pour une valeur de somme partielle qui est inférieure ou égale à la valeur de capacité fixée, on fixe comme valeur limite une première valeur de capacité de transmission, en ce que, pour une valeur de somme partielle supérieure à la valeur de capacité fixée, on vérifie, en tenant compte des valeurs de débit binaire de pointe et des valeurs de débit binaire moyennes de tous les flux d'informations à haute priorité de perte de cellules, y compris éventuellement le flux d'information à prendre en compte pour la liaison virtuelle à établir, si la valeur de capacité fixée est suffisante pour un multiplexage statistique de ces flux d'informations, et en ce que, pour une valeur de capacité suffisante pour un multiplexage statistique de ce genre, on fixe comme valeur limite la première valeur de capacité de transmission déjà mentionnée, sinon, en revanche, on fixe comme valeur limite une deuxième valeur de capacité de transmission inférieure à la première.

2. Procédé suivant la revendication 1, caractérisé en ce que, à chaque établissement ou libération d'une liaison virtuelle, on met à jour, pour les flux d'informations à haute priorité de perte de cellules, d'une part une valeur de somme partielle formée par les valeurs de débit binaire moyennes et d'autre part une valeur de somme de produits dans laquelle sont contenues, pour chacune des liaisons virtuelles existantes, une valeur de produit de la valeur de débit binaire moyenne par la différence entre la valeur de débit binaire de pointe et la valeur de débit binaire moyenne, en ce que l'on augmente la valeur de somme partielle ou la valeur de somme de produits concernée d'une valeur de débit binaire moyenne ou d'une valeur de somme de produits à prendre en compte pour la liaison virtuelle à établir, dans le cas où un flux d'informations à haute priorité de perte de cellules est prévu pour la liaison virtuelle concernée, en ce que l'on additionne à la valeur de somme partielle éventuellement augmentée une valeur de racine carrée multipliée par un facteur d'agrandissement, de la valeur de somme de produits éventuellement augmentée, et en ce que l'on indique par une valeur de comparaison qui en résulte et qui est inférieure ou égale à la valeur de capacité fixée la possibilité d'un multiplexage statistique de flux d'informations à haute priorité de perte de cellules.

3. Procédé suivant la revendication 1 ou 2 caractérisé en ce que, à chaque établissement ou libération d'une liaison virtuelle, on met à jour pour tous les flux d'informations, d'une part, une valeur de somme partielle formée par les valeurs de débit binaire moyennes et d'autre part, une valeur de somme de produits dans laquelle sont contenus, pour chacune des liaisons virtuelles existantes un nombre de valeurs de produit correspondant au nombre des différents flux d'informations apparaissant pour la liaison virtuelle associée, les valeurs de produit étant formées chacune par le produit de la valeur de débit binaire moyenne par la différence entre la valeur de débit binaire de pointe et la valeur de débit binaire moyenne du flux d'informations associé, en ce que l'on augmente la valeur de somme partielle ou la valeur de somme de produits concernée d'un nombre de valeurs de débit binaire moyennes ou de valeurs de somme de produits correspondant au nombre des différents flux d'information à prendre en compte pour la liaison virtuelle à établir, en ce que l'on additionne à la valeur de somme partielle augmentée une valeur de racine carrée, multipliée par un facteur d'agrandissement, de la valeur de somme de produits augmentée, et en ce que l'on indique par une valeur de comparaison qui en résulte et qui est inférieure ou égale à la valeur limite fixée la possibilité d'un multiplexage statistique de tous les flux d'informations à prendre en compte.
